# EUROPEAN PATENT APPLICATION

(11) **EP 3 439 231 A1**
(43) Date of publication of application: **06.02.2019**
(21) Application number: 17775213.6
(22) Date of filing: 29.03.2017
(51) Int. Cl.: H04L 9/32, G06F 21/64, G06Q 20/38, G09C 1/00

(54) **PRIVATE NODE, PROCESSING METHOD FOR PRIVATE NODE, AND PROGRAM FOR SAME**

(30) Priority: 31.03.2016 JP 2016071341
(71) Applicant: Bitflyer, Inc., Minato-ku Tokyo 107-6208 (JP)
(72) Inventor: KANO Yuzo, Tokyo 107-6208 (JP); KOMIYAMA Takafumi, Tokyo 107-6208 (JP)
(74) Representative: Pinney, Matthew David
(86) International application number: PCT/JP2017/012875
(87) International publication number: WO 2017/170679

(57) **Abstract**

The present invention achieves reliability of recording as well as expanding the fields of application in a network wherein transactions for which transaction information is noted are divided into blocks and imported into a distributed database. Nodes of which the network is composed are classified as a public node 2a and a private node 2b. The public node 2a fulfils the role of generating a transaction to be recorded, and processing for recording to the distributed database thereafter is carried out through the cooperation of a plurality of private nodes 2b. Transaction generation is allowed on a broad basis for the public node 2a which may include unreliable nodes, while processing for recording to the distributed database is restricted to the reliable private nodes 2b.

## Description

### Technical Field

The present invention relates to a node device and a computer program for a private node/public node, in particular to a network mechanism that takes in transactions in each of which information regarding a transaction is described into a distributed database after forming a block from the transactions.

### Background Art

A technology called blockchain is known. The technology is called in this way because it is a mechanism that synchronizes the same records among many nodes on a network and blocks serving as recording units are added one after another in a chain while taking over content (hash) of the preceding block when a new record is added to an existing record. In general, the term "blockchain" may refer to a structure of a database in which blocks are linked in a chain, but in some cases the term is used in a broad sense including a mechanism that operates as a P2P network and a mechanism of approval of a transaction. Thus, at present, a definition of the term is not certain. Therefore, in the present specification, "blockchain" is used when being used in a narrow sense as in the former, and "blockchain technology" is used when being used in a broad sense as in the latter, in order to prevent confusion.

The blockchain technology has many advantages such as zero downtime, difficulty of falsification, and low cost. Therefore, besides virtual currency including bitcoin and currency derived from bitcoin, the blockchain technology is beginning to be noticed as a method for managing information regarding various assets as a transaction. For example, Non Patent Literature 1 discloses use of the blockchain that can play an important role for establishing reliability for proof of existence of various documents and identity verification.

### Citation List

### Non Patent Literature

Non Patent Literature 1: Blockchain Establishes Relationship of Trust in Cyberspace -- Important Meaning of "Proof of Existence" and "Identity Verification", [online], [Retrieved on March 28, 2016], the Internet <URL:http://diamond.jp/articles/-/53050>

### Summary of Invention

### Technical Problem

A blockchain technology mainly includes a public node method and a private node method. The public node method is a method in which anyone can participate as a node on a network and is adopted also in bitcoin and the like. The fact that anyone can participate means that there can be an unreliable node. Therefore, to prevent falsification of data and the like, a high cost and slow consensus algorithm such as proof of work (POW) or proof of stake (POS) is required. On the other hand, the private node method is a method in which only a person authorized as the node on the network can participate. This method includes only reliable nodes. Therefore, sufficient reliability can be secured without use of an advanced consensus algorithm as in the public method. In a case where a system is constructed that can deal with transactions of various assets using the blockchain technology, the private node method is better to secure high reliability. However, the private node method has a disadvantage that application areas are limited due to limitation of the node as described above. On the other hand, the public node method can flexibly deal with various application areas. However, the public node method has problems such as the falsification of data by the unreliable node, and therefore is disadvantageous in terms of reliability of recording.

The present invention has been made in view of such circumstances, and an object of the present invention is to compatibly secure the reliability of recording and expandability of application areas in a network that takes in transactions in each of which transaction information is described into a distributed database after forming a block from the transactions.

### Solution to Problem

In order to achieve the above object, a first aspect of the invention provides a node device for a private node in a transaction processing network including: a plurality of public nodes for generating a transaction in which transaction information is described; a plurality of private nodes with a limited number of nodes; and a distributed database in which the same record content is held synchronously in each node and blocks serving as recording units are linked according to recording order. The node device includes a block generation unit, an approval request unit, and a block finalization unit. The block generation unit generates a first block including a first transaction generated by a first public node. The approval request unit transmits an approval request of the first block to a group of predetermined m (m ≥ 2) private nodes after attaching a signature by a secret key of an own node to the first block. In a case where the block finalization unit receives an approval result of the first block from the private node serving as a request destination of approval, the block finalization unit finalizes, after verifying validity of a signature attached to the approval result using a public key of the request destination of approval, addition of the first block to the distributed database on condition that approvals of n (m ≥ n ≥ 1) or more nodes among a group of m private nodes are obtained.

Here, in the first aspect of the invention, it is preferable that the block finalization unit notifies the first public node of a processing result of the first transaction in the case where the addition of the first block to the distributed database is finalized.

In the first aspect of the invention, an approval response unit may be further provided. In a case where the approval response unit receives the approval request of the first block from the private node serving as a request source of approval, the approval response unit verifies, after verifying validity of the signature attached to the approval request using a public key of the request source of approval, content of the first block that is related to the approval request by referring to data regarding a transaction stored in a processing standby area of the own node, and also transmits the approval result with a signature by a secret key of the own node to the private node serving as the request source of approval.

In the first aspect of the invention, it is preferable that n is a majority of m. In addition, in a case where the first block is generated by the own node, the block generation unit may stand by without continuously transmitting an approval request of a new block at least until finalization of addition of another block generated by another node to the distributed database. Furthermore, in the transaction processing network, it is preferable that a protocol that adds or invalidates a public key of the private node is prepared in advance.

A second aspect of the invention provides a node device for a public node in a transaction processing network including: a plurality of public nodes for generating a transaction in which transaction information is described; a plurality of private nodes with a limited number of nodes; and a distributed database in which the same record content is held synchronously in each node and blocks serving as recording units are linked according to recording order. The node device includes a transaction generation unit, a recording request unit, and a result reception unit. The transaction generation unit generates a first transaction. The recording request unit transmits the first transaction to at least one private node and requests recording of the first transaction. Regarding a first block including the first transaction that is generated by one of the private nodes that received the first transaction, in a case where a block finalization condition is satisfied and addition of the first block to the distributed database is finalized, the result reception unit receives a processing result indicating that the recording of the first transaction transmitted by one of the private nodes that received the first transaction is completed. The block finalization condition is that approvals of n (m ≥ n ≥ 1) or more nodes among a group of predetermined m (m ≥ 2) private nodes are obtained by an approval protocol between the private nodes using multisignature by public key cryptography.

A third aspect of the invention provides a computer program for a private node in a transaction processing network including: a plurality of public nodes configured to generate a transaction in which transaction information is described; a plurality of private nodes with a limited number of nodes; and a distributed database in which the same record content is held synchronously in each node and blocks serving as recording units are linked according to recording order. The computer program causes a computer to execute processing including: a first step of generating a first block including a first transaction generated by a first public node; a second step of transmitting an approval request of the first block to predetermined m (m ≥ 2) private nodes after attaching a signature by a secret key of an own node to the first block; and a third step of finalizing, in a case where an approval result of the first block is received from the private node serving as a request destination of approval, addition of the first block to a distributed database after verifying validity of a signature attached to the approval result using a public key of the request destination of approval, on condition that approvals of n (m > n ≥ 1) among m private nodes are obtained.

Here, in the third aspect of the invention, it is preferable that the third step includes a step of notifying the first public node of a processing result of the first transaction in the case where the addition of the first block to the distributed database is finalized.

The third aspect of the invention may further includes a fourth step of, in a case where the approval request of the first block is received from the private node serving as a request source of approval, verifying, after verifying validity of the signature attached to the approval request using a public key of the request source of approval, content of the first block that is related to the approval request by referring to data regarding a transaction stored in a processing standby area of the own node, and also transmitting the approval result with a signature by a secret key of the own node to the private node serving as the request source of approval.

In the third aspect of the invention, it is preferable that n is a majority of m. In addition, in a case where the first block is generated by the own node, the first step may include a step of standing by without continuously transmitting an approval request of a new block at least until finalization of addition of another block generated by another node to the distributed database. Furthermore, in the transaction processing network, it is preferable that a protocol that adds or invalidates a public key of the private node is prepared in advance.

A fourth aspect of the invention provides a computer program for a public node in a transaction processing network including: a plurality of public nodes configured to generate a transaction in which transaction information is described; a plurality of private nodes with a limited number of nodes; and a distributed database in which the same record content is held synchronously in each node and blocks serving as recording units are linked according to recording order. The computer program causes a computer to execute processing including: a first step of generating a first transaction; a second step of transmitting the first transaction to at least one of the private nodes and requesting recording of the first transaction; and a third step of receiving a processing result indicating that the recording of the first transaction transmitted by one of the private nodes that received the first transaction is completed in a case where addition of a first block to the distributed database is finalized on condition that, for a block that is generated by one of the private nodes that received the first transaction and including the first transaction, approvals of n (m ≥ n ≥ 1) or more among predetermined m (m ≥ 2) private nodes are obtained by an approval protocol between the private nodes using multisignature by public key cryptography.

### Advantageous Effects of Invention

According to an aspect of the present invention, nodes constituting a transaction processing network are divided into a public node and a private node. The public node plays a role of generating a transaction in which transaction information is described, and subsequent processing is performed by cooperation of private nodes using a low cost and quick consensus algorithm called multisignature (multisig) using public key cryptography. Regarding the generation of the transaction, while widely recognizing that the public node can include an unreliable node, the subsequent processing such as generation and finalization of a block is limited to the reliable private node. This makes it possible to compatibly secure expandability of application areas, which is an advantage of a public node method, and reliability of recording, which is an advantage of a private node method.

### Brief Description of Drawings

Fig. 1 is a physical configuration diagram of a transaction processing network.
Fig. 2 is a logical configuration diagram of the transaction processing network.
Fig. 3 is an explanatory diagram of a method of setting a public key in a private node.
Fig. 4 is a functional block diagram of a node device for a public node.
Fig. 5 is a functional block diagram of a node device for a private node.
Fig. 6 is a diagram illustrating a flow of transaction recording processing.
Fig. 7 is a diagram illustrating a processing standby state of a transaction.
Fig. 8 is an explanatory diagram of a block approval by multisignature.
Fig. 9 is an explanatory diagram of a database structure.

### Description of Embodiments

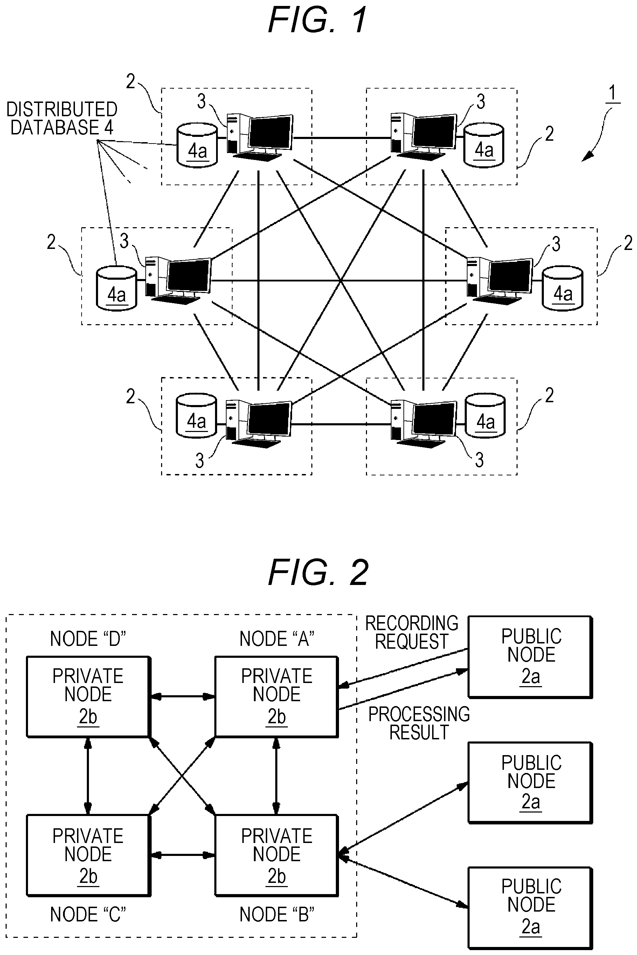

Fig. 1 is a physical configuration diagram of a transaction processing network according to an embodiment of the present invention. A transaction processing network 1 is used as a management system that manages information regarding transactions. The transaction to be managed is determined in advance as a specification of the system according to the purpose of use. For example, a transaction of actual currencies is managed in a banking system, and a transaction of securities is managed in a security system. In the present specification, "transaction" refers to a concept including contract in addition to assets such as actual currencies, virtual currencies, securities, and real estates, and retaining (stock) of states of such assets and transferring (flow) of such assets. The contract can be the asset or liability. In addition, a wider range of the transaction can be defined by introducing a concept of derivatives.

For example, "remitting 100 million yen from A to B" or "receiving 500 specified shares from A to B" means the transferring (flow) of the asset and can be regarded as a transaction in one direction. "A has a deposit of 100 million yen" or "A has 500 specified shares" can be regarded as the asset itself or the concept of retaining (stock) of the state of the asset. "A purchases US dollars for 100 million yen from B" or "A purchases 500 specified shares for 1,000 yen per share from B" can be regarded as a transaction in two directions in which two types of transfer (flow) of the asset occur simultaneously.

The transaction processing network 1 is a peer to peer (P2P) type network and includes not only a pure P2P but also a so-called hybrid type (which includes a client server type configuration in part). Nodes 2 participating in (connecting to) the transaction processing network 1 performs communication (P2P communication) in a one-to-one, equal relationship. Each node 2 includes a computer 3 and a database 4a as a node device. The information regarding a transaction is managed by a distributed database 4 on the network 1, that is, an aggregation of the databases 4a provided for each node 2. All the databases 4a existing on the network 1 are synchronized by a blockchain technology and basically hold the same record content. In a case where the authorized node 2 updates the distributed database 4, another node 2 connected to an own node 2 is notified thereof. Thereafter, by repetition of the P2P communication between the nodes, the notification finally spreads throughout the network 1. As a result, the databases 4a of all the nodes 2 are updated and shared as the same record content.

The P2P communication in the network 1 is performed by SSL communication in order to secure security. In addition, validity of the transaction exchanged among the nodes 2 is verified by a digital signature using public key cryptography. As a premise for that, each node 2 holds a secret key (personal identification number) of an address managed by itself (an owner of a network address = an owner of the secret key). A public key is uniquely specified by a secret key. As the network address, the public key itself may be used, or a public key which is hashed and to which a checksum is added as in bitcoin and the like may be used. A transmitter of the transaction (a source of the asset) transmits the transaction after attaching a signature by the secret key of the address managed by itself to the transaction to be sent. A recipient of the transaction verifies validity of the signature attached to the received transaction by the public key corresponding to the secret key. Note that the public key cryptography used here is different from public key cryptography of multisignature (multisig) regarding an approval of a block to be described later. A secret key of the multisig is owned only by a private node 2b irrespective of the above network address.

Note that Fig. 1 illustrates a full connect type in which each node 2 is connected to all other nodes 2, but this is only an example, and any topology may be adopted. In addition, in a case where information is transmitted to a specific node 2, a protocol may be introduced that enables direct transmission to a destination by designation of the address rather than indirect transmission by the P2P communication.

Fig. 2 is a logical configuration diagram of the transaction processing network 1 in an embodiment. In the present embodiment, the nodes 2 constituting the transaction processing network 1 include a public node 2a and the private node 2b. The public node 2a is an application node serving as a subject of a transaction (which may include an unreliable node). The public node 2a generates a transaction in which information regarding a transaction is described and directly or indirectly transmits the transaction to a group of private nodes 2b after attaching a signature to the transaction. The public node 2a only requests recording of the transaction to the group of private nodes 2b and does not perform recording processing to the distributed database 4 on its own. What are important for the public node 2a are that (regardless of whether it is up-to-date or not) being capable to perform a query, attaching a signature to a newly created transaction, and requesting an approval of the transaction to the group of private nodes 2b.

Note that, for example, at the time of retrieval such as calculation of a balance of a certain address, in order to speed up processing, the record content of the database 4a may be managed with an index at part of a plurality of public nodes 2a. Since data in the distributed database 4 is basically a Key-Value type, there is a disadvantage that a conditional query takes a very long time. An application range can be extended by providing a node with an own index for retrieval to eliminate the disadvantage.

The private nodes 2b are reliable nodes with a number limit, and perform the recording processing of the transaction requested by a public node 2a to the distributed database 4. The recording processing is performed by cooperation of the group of private nodes 2b as will be described later. In a case where the recording processing is completed, a processing result is notified to the public node 2a serving as a request source. What is important for the private node 2b is that the transactions are added to the distributed database 4 after approving transactions and forming a block from the transactions, and a reward (incentive) such as mining commission employed in virtual currencies such as bitcoin is not always necessary.

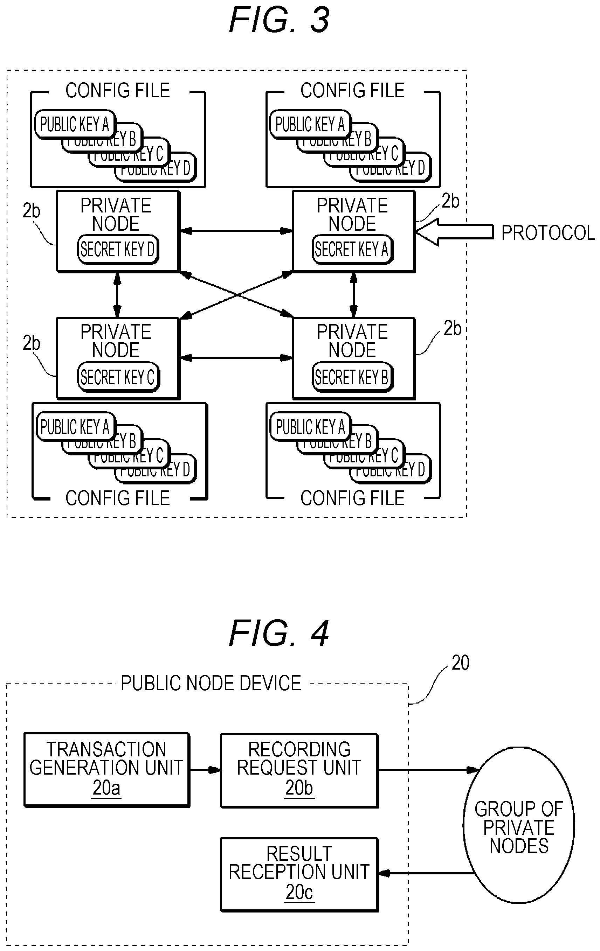

A plurality of private nodes 2b approves a block by the multisignature (multisig) regarding an approval of a block using the public key cryptography. Therefore, as illustrated in Fig. 3, each private node 2b has a secret key of the own node. At the same time, public keys are shared among the private nodes 2b by reading config files in which the public keys are described at the time of system startup. In addition, a protocol that adds or invalidates the public key of the private node 2b is prepared, and by execution of the protocol, the public key can be added or invalidated without rewriting the config file. Since information regarding the public key is required to be strictly managed, the information is exchanged by SSL or the like in order to secure safety.

Fig. 4 is a functional block diagram of a node device for the public node 2a (hereinafter referred to as a "public node device 20"). The public node device 20 includes a transaction generation unit 20a, a recording request unit 20b, and a result reception unit 20c. The transaction generation unit 20a generates a transaction in which information regarding a transaction is described in accordance with a predetermined format. The information regarding a transaction is obtained from input information input by a user according to an instruction on a display screen or from received information received through another network, for example. The recording request unit 20b transmits, after attaching a signature by a secret key of an address managed by itself to the transaction generated by the transaction generation unit 20a, the transaction to the group of private nodes 2b via the P2P communication between the nodes 2, and requests the group of private nodes 2b to record the transaction. The result reception unit 20c receives a processing result of the transaction transmitted from one of the private nodes 2b, and presents the processing result to the user.

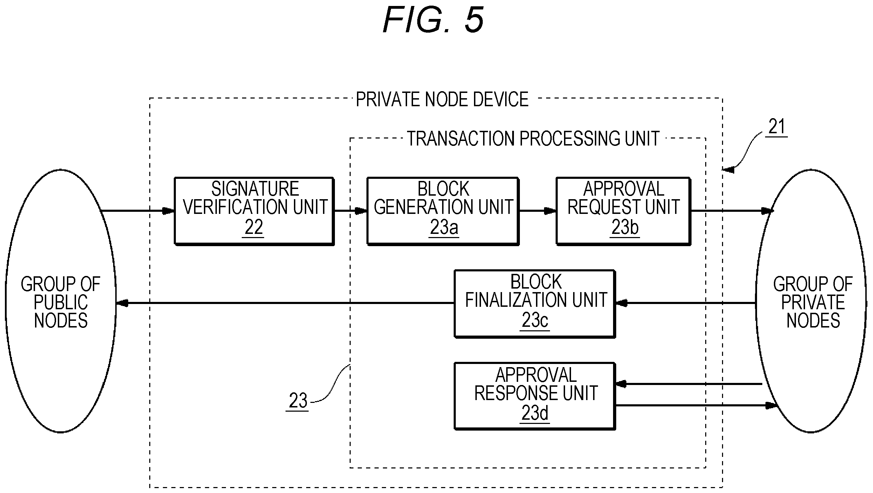

Fig. 5 is a functional block diagram of a node device for the private node 2b (hereinafter referred to as a "private node device 21"). The private node device 21 includes a signature verification unit 22 and a transaction processing unit 23. The signature verification unit 22 verifies validity of the signature attached to the transaction accepted as a recording request from the public node 2a using a public key corresponding to the secret key. Note that, in addition to the signature, it is also verified that double-use of the asset does not exist.

On the premise that the signature can be verified as valid, the transaction processing unit 23 records the transaction in the distributed database 4 in a case where a predetermined condition is satisfied. The transaction processing unit 23 includes a block generation unit 23a, an approval request unit 23b, a block finalization unit 23c, and an approval response unit 23d.

Here, the private node device 21 plays two roles. One is a role in which an own node 2b generates a block and requests another node 2b to approve the block, and as configurations for the role, the block generation unit 23a, the approval request unit 23b, and the block finalization unit 23c are included. The other is a role of approving the block generated by the other private node 2b, and as a configuration for the role, the approval response unit 23d is included. Thus the private node 2b can be both of a request side that requests the other node 2b to approve the block generated by the own node 2b, and an approval side that approves, by the own node 2b, the block generated by the other node 2b.

The block generation unit 23a generates a block by combining a plurality of transactions, a request for recording processing of which is received from the public node 2a serving as a request source of the recording of the transaction. The approval request unit 23b transmits, after attaching a signature by a secret key of the own node 2b to the block generated by the block generation unit 23a, an approval request of the block to a group of predetermined m (m ≥ 2) private nodes 2b as config of the system. The node serving as a request destination of approval may include the own node. In a case where the block finalization unit 23c receives an approval result of the block from the private node 2b serving as the request destination of approval, the block finalization unit 23c determines whether or not the following block finalization condition is satisfied after verifying validity of a signature attached to the approval result using a public key corresponding to the secret key of the request destination of approval.

### [Block Finalization Condition]

### Approvals of n (m ≥ n ≥ 1) or more among m (m ≥ 2) private nodes 2b are obtained

In this block finalization condition, it is preferable that n is a majority of m. With this condition, reliability of the approval can be secured within a reasonable and realistic range. For example, in a case where there are four private nodes 2b as illustrated in Fig. 2, the block finalization condition is satisfied when three (m = 3) private nodes 2b are requested of approvals, and approvals from two (n = 2) or more of them are obtained.

It is preferable that m is equal to or smaller than a limited number of one digit, two digits, or the like, and it may be preferable that m is an odd number such as 5, 9 or the like depending on the block finalization condition. In addition to being the majority of m, it may be preferable that n is a specified predetermined number of equal to or more than the majority of m.

As for the block finalization condition, although one node is allowed to make one approval by one vote in the above description, it is also possible to give an arbitrary positive real number of votes to each node and determine that the approvals are obtained by the votes of a majority. Note that, in this case, the "majority" is the number exceeding half of the total number of votes.

In a case where the block relating to the approval request satisfies the block finalization condition, addition of the block to the distributed database 4 is finalized, and in a case where the condition is not satisfied, addition of the block to the distributed database 4 is not performed. The block finalization unit 23c notifies the public node 2a serving as the request source of the recording of the transaction of a processing result (OK/NG) of the transaction. In the case where the addition of the block to the distributed database 4 is finalized, it is notified to all the nodes 2 of the transaction processing network 1 that the block is added to the database 4a of the own node 2b and a new block is added in accordance with the finalization of the block. With this notification, the databases 4a of all the nodes 2, that is, the distributed database 4 is updated.

Although the notification is required to be issued to all the nodes 2 directly or indirectly, there may be also cases where the notification is issued to all of the private nodes 2b and part of the public nodes 2a, all of the private nodes 2b, part of the private nodes 2b and part of the public nodes 2a, or part of the private nodes 2b, besides a case where the notification that the new block is added in accordance with the finalization of the block is issued to all the nodes 2 directly.

Meanwhile, in a case where the approval response unit 23d receives the approval request of the block from the private node 2b serving as the request source of approval, the approval response unit 23d verifies validity of the signature attached to the approval request using a public key (corresponding to the secret key of the request source of approval) . In addition, the approval response unit 23d refers to data regarding the transactions recorded in the own node 2b to verify content of the block relating to the approval request (including consistency of the transactions in the block) . Then, in a case where a verification result that the content is valid is obtained, the approval response unit 23d transmits an approval result with a signature by a secret key of the own node 2b to the private node 2b serving as the request source of approval.

Note that, as measures against hacking of the private node 2b, that is, for a time when the private node 2b is hacked, in a case where one block is generated by the own node 2b, the block generation unit 23a stands by without continuously transmitting an approval request of a new block at least until finalization of addition of another block generated by another node 2b to the distributed database 4. That is, it is prohibited to continuously perform processing of finalizing the block in the same private node 2b.

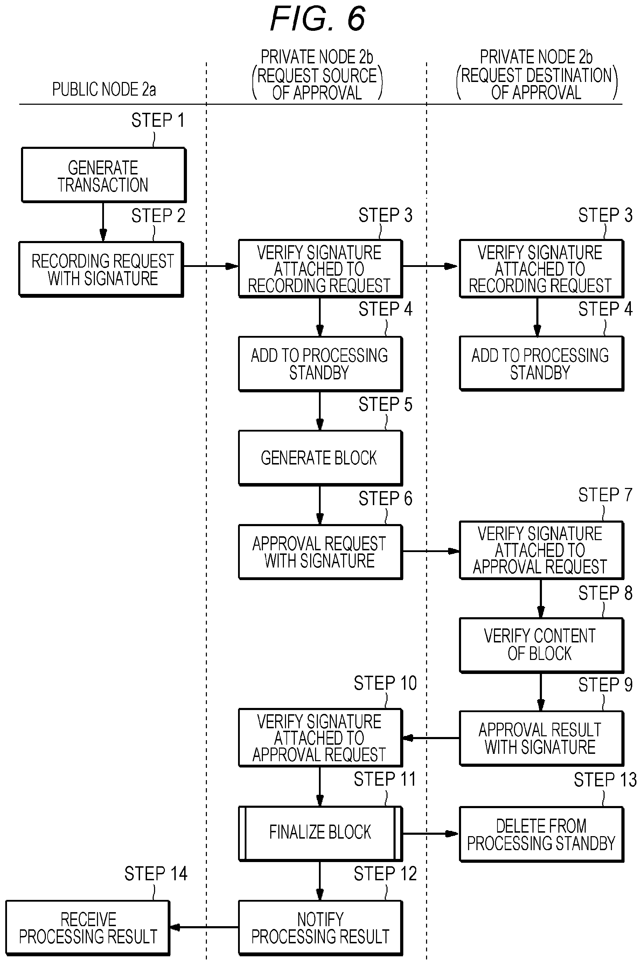

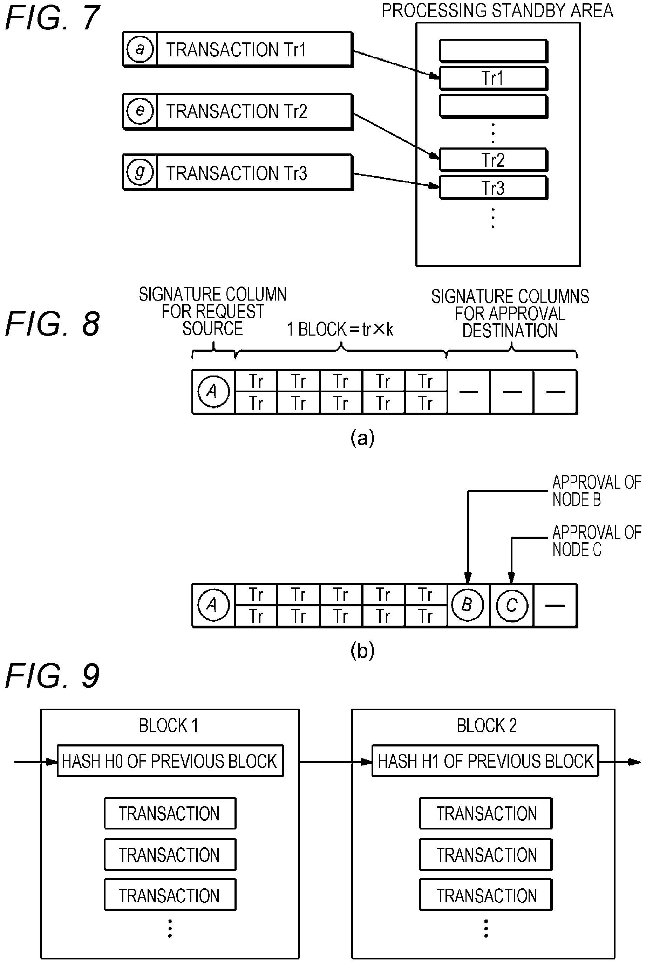

Next, a flow of transaction recording processing will be described with reference to Fig. 6. First, a transaction Tr in which information regarding a transaction is described is generated in the public node 2a (Step 1), and a recording request of the transaction Tr is transmitted to the group of private nodes 2b after attachment of a signature to the transaction Tr by a secret key of an address managed by itself (Step 2). For example, as illustrated in Fig. 7, a signature "a" by a secret key of an address managed by a source a of an asset is attached to a transaction Tr1 regarding the source a, and signatures are attached to transactions Tr2 and Tr3 in a similar way.

Each of the private nodes 2b that received the recording request of the transaction Tr verifies the signature attached to the recording request using a public key corresponding to the secret key of the source of the transfer (Step 3). As illustrated in Fig. 7, the signature "a" attached to the transaction Tr1 is verified using a public key corresponding to the secret key of the transfer source a, and the transactions Tr2 and Tr3 are similarly verified. Note that, as described above, in addition to the signature, it is also verified that the double-use of the asset does not exist. In a case where the validity of the signature and the like are confirmed in each of the private nodes 2b, the transactions Tr1 to Tr3 are temporarily stored in a predetermined storage area (processing standby area) in a storage device of the own node 2b (Step 4) . In addition, in Step 4, in a case where it is determined that the transfer source of the asset is not valid, the public node 2a serving as a request source is notified thereof.

In Step 5, a block is generated in one of the private nodes 2b. The block is a combination of a plurality of transactions Tr stored in the processing standby area of the own node 2b. Then, in Step 6, an approval request with a signature having a data structure as illustrated in Fig. 8(a) is generated. The data structure includes a signature column for a request source that requests an approval of the block, a block main body that combines the plurality of transactions Tr, and signature columns for approval destinations of the block. However, a configuration in the figure is for convenience of explanation, and actually it is not necessary to provide the signature columns for the request source/approval destination separately. In a case where a node A generates a block among a group of four private nodes 2b illustrated in Fig. 2 (the nodes are named A to D), in the signature column for a request source in Fig. 8(a), a signature "A" by a secret key of the node A is entered, and the signature columns for approval destinations (the columns where signatures of the nodes B to D are entered) are blank. The approval request generated in the node A is transmitted to the other private nodes 2b, that is, the three nodes B to D.

Steps 7 to 9 are processing of the private node 2b that received the approval request of the block, that is, the request destinations B to D of approval. First, in Step 7, validity of the signature "A" and the like attached to the approval request is verified using the public key of the node A and the like serving as the request source of approval (Step 7). In Step 7, not only the node A but also other signatures attached at the time of the verification are verified together. Basically, the signatures are attached in the order such as node A →B →C →D, and the block is finalized when the signatures of a majority (n) are obtained. Various implementation methods are conceivable as to how to maintain the order. Note that the verification itself of the signature of the block is performed not only in the private node 2b but also in all the public nodes 2a so as not to trust a hacked block. In a case where it is determined that the request source of approval is valid, the processing proceeds to Step 8, and in a case where it is determined to be not valid, processing after Step 8 is not performed.

In Step 8, content of the block relating to the approval request is verified. Specifically, the transactions stored in the processing standby area of the own node 2b are referred to, and in a case where the content of the block satisfies at least the following approval conditions, the block is approved. In a case where it is determined that the content of the block is valid, the processing proceeds to Step 9, and in a case where it is determined to be not valid, processing after Step 9 is not performed (a processing result = NG).

### [Block Approval Conditions]

(1) All the transactions Tr in the block are unprocessed in the own node 2b (prevention of duplicate recording)
(2) The content of all the transactions Tr in the block match the content of the transaction Tr stored in the processing standby area of the own node 2b (prevention of falsification of data)
(3) The asset of the individual transaction Tr is not used (prohibition of double-use of the asset)

In Step 9, an approval result with a signature is generated. In a case where the block can be approved, as illustrated in Fig. 8(b), the signature by the own secret key is entered in a column assigned to the own node 2b among the signature columns for an approval destination. The approval result with the signature is transmitted to a request source A of approval.

Steps 10 to 12 are processing of the private node 2b that received the approval result of the block, that is, the request source A of approval. First, in Step 10, validity of the signature attached to the approval result is verified using public keys of the request sources B to D of approval (Step 10) . In a case where it is determined that the request destination of approval is valid, the processing proceeds to Step 11, and in a case where it is determined to be not valid, the processing after Step 12 is not performed.

In Step 11, in a case where approvals of n (m ≥ n ≥ 1) or more among m private nodes are obtained, the block finalization condition is satisfied and addition of the block to the distributed database 4 is finalized. An example of Fig. 8 (b) means that although approvals of the two nodes B and C were obtained but an approval of the node D was not obtained among the three nodes B to D to which approvals have been requested. In this case, if the block finalization condition is obtainment of approvals of a majority, n/m = 2/3 holds and the condition is satisfied. Conversely, in a case where n = 0 or 1, the block finalization condition is not satisfied.

In the case where the block finalization condition is satisfied, processing of recording the finalized block in the distributed database 4 is performed by the request source A of approval. Specifically, first, in the own node A, the transaction Tr included in the finalized block is deleted from the processing standby area, and the finalized block is added to the own database 4. Further, a notification that the finalized block is newly added is transmitted to the whole of the transaction processing network 1 including the other nodes B to D connected to the own node A. Upon receiving the notification of the finalized block, all the nodes 2 add the finalized block to the own database 4a after verifying a signature of a notification source. In addition, with this notification, all the nodes 2 (including the nodes B to D) holding unprocessed transaction Tr in the processing standby area deletes the transaction Tr included in the finalized block from the processing standby area (Step 13). On the other hand, in a case where the block finalization condition is not satisfied, the block generated this time is canceled. As a result, the unprocessed transaction Tr in the processing standby area is continuously held and stands by for subsequent opportunity of generation of a block.

Fig. 9 is an explanatory diagram of a structure of the database 4a. In this structure, the blocks serving as recording units are linked in a chain according to recording order. Each block (finalized block) includes a plurality of transactions and a hash of a preceding block. Specifically, a certain block 2 includes a hash H1 of a previous block 1 succeeded from a further previous block 1. In addition, a hash H2 of the block 2 is calculated including a group of transaction of the own block 2 and the hash H1 succeeded from the previous block 1, and the hash H2 is succeeded by the next block. In this way, while succeeding content of the preceding block as the hash (H0, H1, ...), the blocks are linked in a chain according to the recording order, such that the record content has consistent continuity to effectively prevent falsification of the record content. In a case where record content in the past is changed, a value of the hash of the block becomes different from that before the change of the record content, and in order to pretend that a falsified block as a correct block, it is necessary to recreate all subsequent blocks. This is very difficult in reality.

Then, in Step 12, a processing result (OK/NG) of the transaction Tr relating to the recording request is notified from one of the private nodes 2b (request source A of approval) to the public node 2a serving as the request source of the recording of the transaction Tr. The public node 2a receives the processing result and presents the processing result to a user (Step 14). Through the above series of processing, the transaction recording processing is completed.

Note that, in the transaction recording processing as described above, there is a possibility that a plurality of private nodes 2b simultaneously generates separate blocks including the same transaction, that is, a possibility that conflict of processing between the private nodes 2b is occur. Such a problem can be solved by performing exclusive control by assigning order of block generation among the private nodes 2b as a round robin, for example. In addition, priority order may be assigned to the group of private nodes 2b, and in a case where the above conflict occurs, only the private node 2b with higher priority may be allowed to perform re-processing of the conflicting transactions.

As described above, according to the present embodiment, the nodes 2 constituting the transaction processing network 1 are divided into the public node 2a and the private node 2b. The public node 2a plays a role of generating the transaction to be recorded, and the subsequent recording processing to the distributed database 4 is performed by cooperation of the group of private nodes 2b. Regarding the generation of the transaction, while widely recognizing that the public node 2a can include an unreliable node, the recording processing to the distributed database 4 is limited to the reliable private node 2b. In this way, by separating the roles of the public node 2a and the private node 2b, it is possible to compatibly secure expandability of application areas, which is an advantage of a public node method, and reliability of recording, which is an advantage of a private node method.

In addition, according to the present embodiment, as a mutual authentication method between the reliable private nodes 2b, a relatively simple consensus algorithm called multisignature (multisig) using public key cryptography is used instead of a costly and slow consensus algorithm such as POW or POS. This makes it possible to process a large amount of transaction quickly and reliably without impairing reliability of recording.

Furthermore, according to the present embodiment, in order to prevent that a generation frequency of the block by a specific private node 2b becomes extremely high, it is prohibited that the same private node 2b sequentially transmits the approval requests of the block. This makes it possible to effectively deal with hacking acts such as applying an excessive load on the specific private node 2b by causing the specific private node 2b to continuously generate the block.

Note that the present invention can also be regarded as a computer program that implements the public node device 20 or the private node device 21 described above.

### Reference Signs List

- 1: Transaction processing network
- 2: Node
- 2a: Public node
- 2b: Private node
- 3: Computer
- 4: Distributed database
- 4a: Database
- 20: Public node device
- 20a: Transaction generation unit
- 20b: Recording request unit
- 20c: Result reception unit
- 21: Private node device
- 22: Signature verification unit
- 23: Transaction processing unit
- 23a: Block generation unit
- 23b: Approval request unit
- 23c: Block finalization unit
- 23d: Approval response unit

## Claims

1. A processing method at a private node constituting a group of private nodes in a network with a group of public nodes and the group of private nodes, comprising steps of:
generating a block with a plurality of transactions,
transmitting an approval request of the block to the group of private nodes,
receiving an approval result from at least one of the private nodes, and
finalizing the block to add the block to a blockchain on condition that approvals are obtained from predetermined number of nodes of the group of private nodes.

2. The processing method according to claim 1, wherein a new approval request of a block is withheld until a block is finalized by other private node of the group of private nodes.

3. The processing method according to claim 1 or 2, wherein the group of private nodes has limited number of private nodes of which the group is constituted.

4. The processing method according to claim 3, wherein the number of private nodes is two digits.

5. The processing method according to any one of claims 1 to 4, wherein the predetermined number is an odd number of one digit.

6. The processing method according to any one of claims 1 to 5, further comprising the step of notifying the fact that the block is added to all of the group of private nodes and part of the group of public nodes.

7. The processing method according to any one of claims 1 to 5, further comprising the step of notifying the fact that the block is added to part of the group of private nodes.

8. The processing method according to claim 7, wherein public key of each private node is shared among private nodes which constitute the group of private nodes.

9. A program for having a computer perform a processing method at a private node constituting a group of private nodes in a network with a group of public nodes and the group of private nodes, the processing method comprising steps of:
generating a block with a plurality of transactions,
transmitting an approval request of the block to the group of private nodes,
receiving an approval result from at least one of the private nodes, and
finalizing the block to add the block to a blockchain on condition that approvals are obtained from predetermined number of nodes of the group of private nodes.

10. A private node constituting a group of private nodes in a network with a group of public nodes and the group of private nodes,
wherein a block with a plurality of transactions is generated to transmit an approval request of the block to the group of private nodes, and
wherein the block is finalized to add the block to a blockchain on condition that approvals are obtained from predetermined number of nodes of the group of private nodes by receiving an approval result from at least one of the private nodes.
